# EUROPÄISCHE PATENTSCHRIFT

(11) **EP 4 297 056 B1**
(45) Veröffentlichungstag und Bekanntmachung des Hinweises auf die Patenterteilung: **28.01.2026**
(21) Anmeldenummer: 22181033.6
(22) Anmeldetag: 24.06.2022
(51) Int. Cl.: H01H 9/02, H01H 9/16, H01H 71/04

(54) **ELEKTRISCHE SICHERUNG ZUR ABSICHERUNG DER ENERGIEVERTEILUNG IN EINER INDUSTRIELLEN ANLAGE**
ELECTRICAL FUSE FOR SECURING THE ENERGY DISTRIBUTION IN AN INDUSTRIAL INSTALLATION
DISPOSITIF DE COUPURE ÉLECTRIQUE À FUSIBLE DESTINÉ À PROTÉGER LA DISTRIBUTION D'ÉNERGIE DANS UNE INSTALLATION INDUSTRIELLE

(43) Veröffentlichungstag der Anmeldung: 27.12.2023
(73) Patentinhaber: Murrelektronik GmbH, 71570 Oppenweiler (DE)
(72) Erfinder: FEIßT, Heiko, 73278 Schlierback (DE)
(74) Vertreter: Karzel, Philipp

(56) Entgegenhaltungen:
- EP-A1- 0 119 187
- EP-A1- 1 179 827
- WO-A1-2013/062420
- DE-A1- 102013 018 292
- US-A1- 2008 231 410

## Beschreibung

Die Erfindung betrifft eine elektrische Sicherung zur Absicherung der Energieverteilung in einer industriellen Anlage wie z. B. einer Automatisierungsanlage oder eine Anlage der Intralogistik. Derartige Anlagen wie Produktions- oder Förderanlage weisen eine Vielzahl von elektrischen Verbrauchern wie Aktoren und/oder Sensoren auf. Den verschiedenen im Feld der industriellen Anlage verteilten Verbrauchern werden über Leitungszweige der Energieverteilung die zum Betrieb notwendige elektrische Energie zugeführt.

Immer komplexer werdende industrielle Anlage bestehen aus verteilten Systemen. Schaltschränke in industriellen Anlagen sollen mit minimierten Bauvolumen ausgeführt werden oder ganz entfallen. Dies macht die Energieverteilung selbst und die elektrische Absicherung der an die Energieverteilung angeschlossenen elektrischen Verbraucher immer schwieriger. In einem Schaltschrank ist eine Verteilung von Strom und Spannung über hohe Leitungsquerschnitte und Sicherungen zu kleiner werdenden Leitungsquerschnitten realisiert. Bei Entfall eines Schaltschrankes ist die Absicherung der einzelnen elektrischen Verbraucher im Feld problematisch.

Aus der EP 1 179 827 A1 ist bekannt, den Zustand eines Schaltkontakts in einem Stromkreis über einen Kontakt eines Hilfskreises festzustellen und über eine Überwachungseinrichtung auszuwerten

Aus der EP 0 119 187 A1 ist ein Elektroinstallationssystem für Wohnungen und Häuser aus Flachleitungen bekannt, wobei auch Hauptsicherungen, wie Leitungsschutzschalter oder Fehlerstromschutzschalter für den Stromversorgungskreis genannt sind.

Der Erfindung liegt die Aufgabe zugrunde, eine elektrische Sicherung vorzuschlagen, die einfach in eine bestehende Verkabelung eingebunden werden kann und einfach und variabel eine verlässliche Absicherung der Energieverteilung in einer Automatisierungsanlage ermöglicht.

Die Aufgabe wird nach den Merkmalen des Anspruchs 1 gelöst.

Die elektrische Sicherung ist in dem Leitungszweig angeordnet, mit der der Verbraucher an die Energieverteilung angeschlossen ist. Die elektrische Sicherung ist in einem geschlossenen Gehäuse aufgenommen, das allseits geschlossen ist. Das Gehäuse ist als Zwischenstecker ausgebildet, wobei das Gehäuse zumindest einen ersten Anschluss für einen Energie zuführenden Leitungszweig und zumindest einen zweiten Anschluss für einen elektrisch abgesicherten Leitungszweig aufweist, der mit dem elektrischen Verbraucher verbunden ist. Zumindest ein Anschluss des Gehäuses ist als Teil eines elektrischen Steckanschlusses für einen anzuschließenden Leitungszweig ausgebildet.

Die Energieverteilung ist aus einer Energiequelle gespeist, welches ein AC/DC Wandler, ein DC/DC Wandler, ein Schaltnetzteil, ein Transformator oder auch ein Akkupack sein kann. So kann ein verwendetes Netzteil eine Netzspannung in eine Kleinspannung umwandeln, vorzugsweise in eine gleichgerichtete Kleinspannung transformieren. Der Hauptzweig der Energieverteilung wird mit einem größeren Leitungsquerschnitt von bis zu 16 mm² ausgelegt, während der aus der Energieverteilung abzweigende Leitungszweig zum Verbraucher mit einem kleineren Leitungsquerschnitt ausgeführt sein kann. Der abgesicherte Leitungszweig zum Verbraucher hat vorteilhaft einen Leitungsquerschnitt zwischen 0,5 mm² und 2,5 mm².

Das Gehäuse mit der integrierten Sicherung bildet ein selbständiges Bauteil oder Modul, welches nach Bedarf in einer industriellen Anlage an beliebiger Stelle eingesetzt werden kann. Ohne großen Aufwand können bestehende und/oder nachträglich angebrachte Verbraucher der Anlage durch Einschleifen des Bauteils in den dem Verbraucher Energie zuführenden Leitungszweig abgesichert werden. Ist im Gehäuse eine elektronische, parametrierbare Sicherung vorgesehen, kann diese entsprechend den Betriebsdaten des angeschlossenen Verbrauchers einfach parametriert werden.

Das Gehäuse ist allseits geschlossen ausgeführt und bildet insbesondere ein Gehäuse der Schutzklasse IP20 oder höher, vorteilhaft ein Gehäuse der Schutzklasse bis zu IP69k. Im Feld sind zweckmäßig Gehäuse der Schutzklassen IP54 bis IP68 verwendet. Eine hohe Schutzklasse ermöglicht den Einsatz der Elektrischen Sicherung auch in kritischen Umgebungen mit hoher Schmutz- oder Feuchtigkeitsbelastung.

Um im Feld variabel eingesetzt werden zu können, ist erfindungsgemäß vorgesehen, das Gehäuse mit der elektrischen Sicherung als Zwischenstecker auszubilden. Der Zwischenstecker bildet ein eigenständiges Bauteil oder Modul, welches im Feld an geeigneter Stelle eingesetzt werden kann.

Es kann vorteilhaft sein, das Gehäuse des Zwischensteckers mit einem weiteren Anschluss auszubilden, insbesondere das Gehäuse als T-Stecker oder H-Stecker auszubilden. Der Energie zuführende Leitungszweig ist zweckmäßig von dem ersten Anschluss auf den weiteren Anschluss durchgeschleift. Der Leitungszweig zum Verbraucher zweigt von dem Energie zuführenden Leitungszweig ab und ist über die im Gehäuse angeordnete Sicherung mit dem abgesicherten Leitungszweig zum Verbraucher mit diesem verbunden.

Vorteilhaft sind alle Anschlüsse des Gehäuses als Teil elektrischer Steckanschlüsse ausgebildet. Die Verwendung von elektrischen Steckanschlüssen gewährleistet eine einfache Entnahme des Bauteils aus dem Gehäuse mit elektrischer Sicherung und Steckanschlüssen aus den Leitungszweigen der Energieverteilung. Es ist ein einfaches Wechseln zerstörter Sicherungen ebenso möglich wie ein Austausch eines Gehäuses mit einer ersten Sicherung gegen ein Gehäuse mit einer zweiten Sicherung mit anderen Betriebsparametern, zum Beispiel anderen Sicherungswerten. Insbesondere ist vorgesehen, dass der erste Anschluss des Gehäuses als Teil eines elektrischen Steckanschlusses zum Anschluss des Energie zuführenden Leitungszweigs und der zweite Anschluss des Gehäuses als Teil eines elektrischen Steckanschlusses
zum Anschluss des elektrisch abgesicherten Leitungszweigs zum Verbraucher ausgebildet ist.

In vorteilhafter Weiterbildung der Erfindung ist der Steckanschluss durch eine Steckverbindung gebildet. Eine derartige Steckverbindung kann aus einer Steckbuchse und einem Stecker gebildet sein. Vorteilhaft bilden eine M12-Steckbuchse und ein M12-Stecker die Steckverbindung. Auch kann eine Steckverbindung aus einem M8-Stecker und einer M8-Steckbuchse Anwendung finden.

In einer anderen Ausführungsform des Bauteils aus Gehäuse und Sicherung ist vorgesehen, dass zumindest ein Anschluss des Gehäuses als Teil eines elektrischen Steckanschlusses zum Anschluss eines zweckmäßig abgehenden, Energie zuführenden Leitungszweigs oder zum Anschluss des elektrisch abgesicherten Leitungszweigs ausgebildet ist. An dem anderen Anschluss des Gehäuses ist ein fest mit der Sicherung im Gehäuse verbundenes Kabel angeschlossen. Das angeschlossene Kabel ist an seinem freien Ende vorteilhaft mit einem Stecker oder einer Steckbuchse einer Steckverbindung versehen, die mit den in der industriellen Anlage im Feld verwendeten Steckanschlüssen kompatibel ist.

Zweckmäßig ist das Gehäuse mit der Sicherung über einen Steckanschluss mit der Energieverteilung im Feld verbunden, wobei das an dem anderen Anschluss des Gehäuses fest verdrahtet angebrachte Kabel in der Länge als Verbindungsleitung zu dem elektrischen Verbraucher konfektioniert sein kann.

In weiterer Ausgestaltung der Erfindung kann es zweckmäßig sein, an dem ersten Anschluss des Gehäuses als Energie zuführenden Leitungszweig eine fest mit der Sicherung im Gehäuse verdrahtetes Kabel vorzusehen und an dem zweiten Anschluss des Gehäuses als elektrisch abgesicherter Leitungszweig eine fest mit der Sicherung im Gehäuse verdrahtetes Kabel vorzusehen. Zweckmäßig sind die fest im Gehäuse verdrahteten Kabel an den freien Enden mit einem Stecker oder einer Steckbuchse einer Steckverbindung versehen, die mit den in der industriellen Anlage im Feld verwendeten Steckanschlüssen kompatibel ist. Die Längen der fest angeschlossenen Kabel sind vorteilhaft so konfektioniert, dass sie den Abstand zwischen der Energieverteilung in der industriellen Anlage und dem anzuschließenden Verbraucher überbrückt. Das Gehäuse mit der Sicherung liegt vorteilhaft in der Mitte zwischen zwei gleich lang konfektionierten Kabeln; andere Anordnungen können zweckmäßig sein.

In weiterer Ausgestaltung der Erfindung kann vorgesehen sein, das Gehäuse als Piercing Gehäuse auszubilden, das unter Nutzung der Piercing Technologie direkt auf eine Energie führende Flachbandleitung aufgebracht wird und die elektrische Verbindung zur Sicherung herstellt. Über die im Gehäuse integrierte Sicherung führt der abgesicherte Leitungszweig zum Verbraucher.

Die elektrische Sicherung im Gehäuse ist eine thermomechanische Sicherung wie eine Bimetall-Sicherung, eine elektronische Sicherung oder eine Schmelzsicherung. Vorteilhaft ist im Gehäuse eine elektronische Sicherung verbaut. In besonderer Ausgestaltung ist die elektronische Sicherung selbstrückstellend. Dies bedeutet z.B., dass nach einem Auslösen der Sicherung z.B. durch Überstrom die Sicherung zweckmäßig nach Ablauf einer vorgegebenen Zeit wieder schließt und die Energieversorgung zum Verbraucher wieder zulässt. Es kann auch vorteilhaft sein, die elektronische Sicherung als Strombegrenzer auszuführen, die einen Stromanstieg über einen vorgegebenen Grenzwert verhindert.

Die im Gehäuse vorgesehene elektrische Sicherung schützt eine nachfolgende Schaltung oder einen Leitungsabschnitt vor unzulässigen physikalischen und/oder elektrischen Zuständen. Die zulässigen Schutzmaßnahmen werden oft von Normen bestimmt. Insbesondere aber nicht ausschließlich können als Kenngrößen die Energiemenge, die Spannung, der Strom, die Frequenzen und/oder elektrische Impulse genutzt werden. Die im Gehäuse vorgesehene elektrische Sicherung ist ausgebildet, der Sicherung nachfolgende Komponenten der industriellen Anlage oder Bereiche der industriellen Anlage abzusichern und im Fehlerfall mit geeigneten Maßnahmen zu reagieren.

Vorteilhaft ist vorgesehen, im Gehäuse zusammen mit der Sicherung eine Anzeigevorrichtung zu integrieren. Über die Anzeigevorrichtung kann der Zustand der im Gehäuse vorhandenen Sicherung optisch angezeigt werden.

In Weiterbildung der Erfindung ist vorgesehen, im Gehäuse neben der elektrischen Sicherung eine Kommunikationseinheit vorzusehen, die geeignet ist, Betriebszustände der Sicherung selbst anzuzeigen wie auch zum Beispiel die Größe des fließenden Stroms, die aufgelaufenen Betriebsstunden der Sicherung, die Netzqualität der Energieverteilung und dergleichen. Eine optional vorgesehene Kommunikationseinheit kann mit einem in der industriellen Anlage vorgesehenen Bus kommunizieren. Über die Kommunikationseinheit können nicht nur Betriebsparameter der Sicherung ausgelesen und zentral verwaltet werden, es können auch von außen Betriebsparameter der elektronischen Sicherung geändert werden, die elektronische Sicherung also nach Typ und Leistungsaufnahme des angeschlossenen Verbrauchers parametriert werden.

Vorteilhaft ist die Kommunikationseinheit eine drahtlose Kommunikationseinheit, die ausgebildet ist, über NFC, Bluetooth, IO-Link Wireless, WLAN und/oder Mobilfunkstandards wie LTE, 5G oder dergleichen zu kommunizieren.

Weitere Merkmale der Erfindung ergeben sich aus den weiteren Ansprüchen, der Beschreibung und der Zeichnung, in der Ausführungsbeispiele der Erfindung dargestellt sind. Die in den Ansprüchen genannten Merkmale sowie die in der nachfolgenden Beschreibung angegebenen Merkmale und die in den Zeichnungen dargestellten Merkmale sind untereinander kombinierbar, auch wenn sie zu unterschiedlichen Ausführungsbeispielen angegeben sind. Die Zeichnungen zeigen:
- Fig. 1: eine schematische Darstellung einer Energieverteilung in einer Automatisierungsanlage mit elektrischen Verbrauchern,
- Fig. 2: eine schematische Darstellung eines Gehäuses mit einer elektrischen Sicherung zum Einsetzen in einen Energie zuführenden Leitungszweig zu einem Verbraucher,

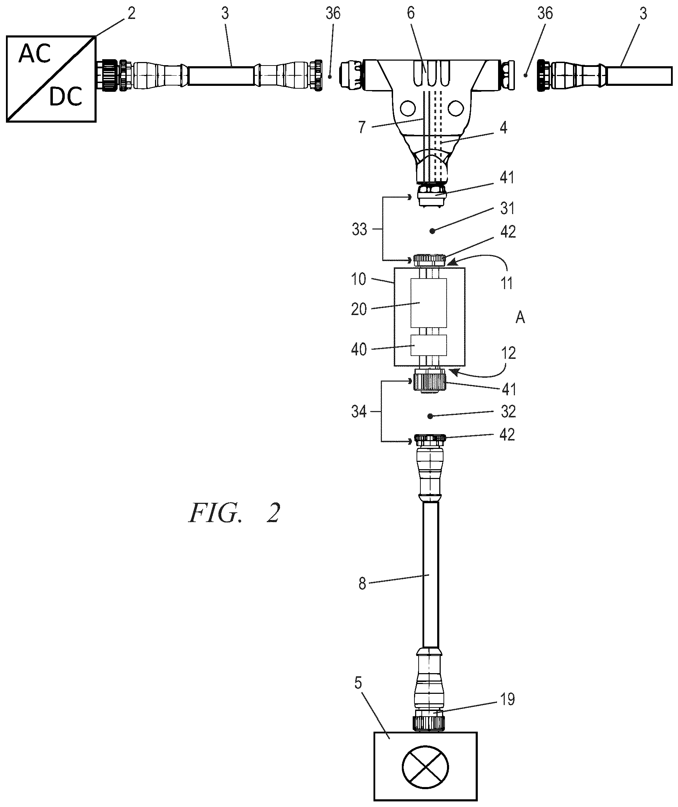

- Fig. 2: ein Ausführungsbeispiel eines Gehäuses mit einer elektronischen Sicherung,

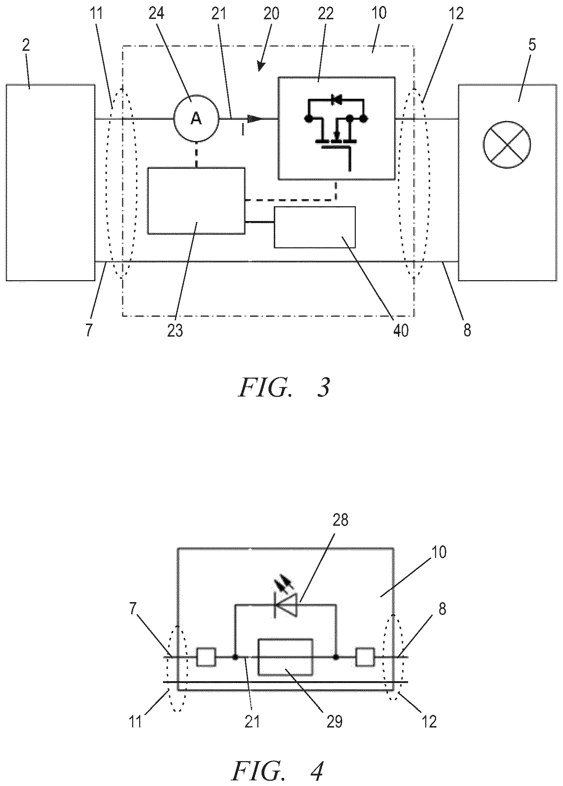

- Fig. 3: ein Ausführungsbeispiel eines Gehäuses mit einer Anzeigevorrichtung für den Zustand der im Gehäuse verbauten Sicherung.

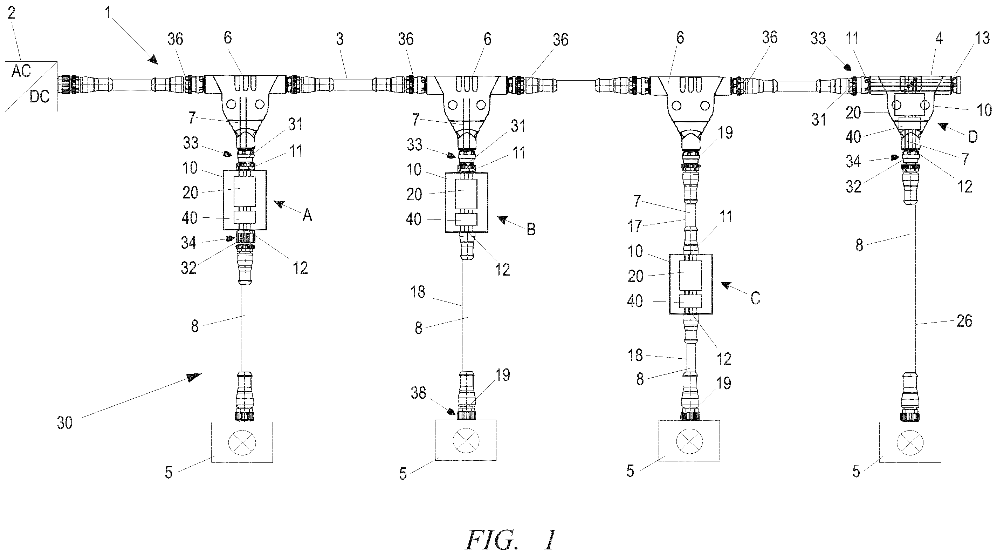

In Fig. 1 ist eine Energieverteilung 1 für eine industrielle Anlage 30 gezeigt, die z.B. eine Automatisierungsanlage oder eine Anlage der Intralogistik sein kann. Derartige industrielle Anlagen 30 können zum Beispiel Produktionsanlagen und/oder Förderanlagen sein. Im Feld der industriellen Anlage 30 sind elektrische Verbraucher 5 verteilt angeordnet, die zentral von einer Energieverteilung 1 mit elektrischer Energie versorgt werden. Verbraucher 5 können Aktoren und/oder Sensoren sein.

Die Energieverteilung 1 für die industrielle Anlage 30 ist von einem Netzteil 2 gespeist, welche im gezeigten Ausführungsbeispiel eine Wechselspannung AC in eine gleichgerichtete Kleinspannung DC transformiert. Die Wechselspannung AC wird aus einem Wechselspannungsnetz von zum Beispiel 230V oder 400V entnommen. Die Kleinspannung DC kann im Bereich zwischen 12V bis 60V liegen. Bevorzugt hat die Kleinspannung 24V oder 48V. Das Netzteil ist nur beispielhaft angegeben. Als Energiequelle kann ein AC/DC Wandler, ein DC/DC Wandler, ein Schaltnetzteil, ein Transformator, ein Akkupack oder eine andere Energiequelle vorgesehen sein.

Die Kleinspannung DC ist einer Hauptversorgungsleitung 3 zugeführt. In der Hauptversorgungsleitung 3 kann eine Kommunikationsbus 4 integriert sein. Zur Energieversorgung eines elektrischen Verbrauchers 5 ist in der Hauptversorgungsleitung 3 ein Abzweig 6 vorgesehen, der als T-Stück ausgebildet sein kann. Über den Abzweig 6 ist von der Hauptversorgungsleitung 3 ein Leitungszweig abgezweigt, der einen dem Verbraucher 5 elektrische Energie zuführenden Leitungszweig 7 bildet.

Zwischen dem Energie zuführenden Leitungszweig 7 und dem Verbraucher 5 ist ein geschlossenes Gehäuse 10 mit einer Sicherung 20 vorgesehen. Das Gehäuse 10 weist einen ersten Anschluss 11 für den Energie zuführenden Leitungszweig 7 auf. Das Gehäuse 10 weist ferner einen zweiten Anschluss 12 für einen durch die Sicherung 20 elektrisch abgesicherten Leitungszweig 8 auf. Der über den Abzweig 6 abgezweigte, dem Verbraucher 5 Energie zuführende Leitungszweig 7 ist über die Sicherung 20 mit dem abgesicherten Leitungszweig 8 verbunden. Der angeschlossene elektrische Verbraucher 5 ist über die Sicherung 20 im Gehäuse 10 elektrisch abgesichert.

Das Gehäuse 10 ist vorteilhaft allseits geschlossen. Insbesondere ist das Gehäuse 10 ein Gehäuse der Schutzklasse IP20 bis IP69koder höher. Vorzugsweise ist das Gehäuse 10 ein Gehäuse der Schutzklasse IP54 bis IP68.

Das Gehäuse 10 mit der elektrischen Sicherung 20 kann an seinen Anschlüssen 11 und 12 unterschiedlich ausgebildet sein. In Fig. 1 sind verschiedene Gehäuse 10 mit unterschiedlich gestalteten Anschlüssen 11 und 12 gezeigt. Die jeweils aus dem Gehäuse 10, der Sicherung 20 im Gehäuse 10 und einer vorteilhaft integrierten Kommunikationseinheit 40 gebildeten Module bzw. selbständigen Bauteile sind in den Grundmerkmalen gleich ausgebildet. Die Module sind nach den Variationen der Anschlüsse 11 und 12 mit den Buchstaben A, B, C und D bezeichnet. Die zu einem Modul A, B, C oder D gemachten Ausführungen gelten grundsätzlich in gleicher Weise für alle anderen Module A, B, C oder D.

In der ersten Ausführungsform des Gehäuses 10, das als Moduls A gezeigt ist, sind alle Anschlüsse 11 und 12 als Teil eines elektrischen Steckanschlusses ausgebildet. In Fig. 2 ist das Modul A vor dem Einsetzen in die dem Verbraucher 5 Energie zuführenden Leitungszweig 7 gezeigt. So ist der Anschluss 11 des Gehäuses 10 als Steckverbindung 31 ausgebildet. Die Steckverbindung 31 wird gebildet aus einer Steckbuchse 41 und einem Stecker 42, wobei die Steckbuchse 41 am Abzweig 6 und der Stecker 42 am Gehäuse 10 ausgebildet sein kann. Entsprechend kann auch vorgesehen sein, am Gehäuse 10 eine Steckbuchse vorzusehen, der mit einem Stecker des Abzweigs 6 die Steckverbindung 31 bildet.

Entsprechend der Ausbildung des Steckanschlusses 31 ist der Steckanschluss 32 am Anschluss 12 des Gehäuses 10 ausgebildet. Das Gehäuse 10 kann mit einer Steckbuchse 41 versehen sein, in die ein Stecker 42 des abgesicherten Leitungszweiges 8 eingesteckt wird. Es kann auch eine Ausgestaltung vorgesehen sein, bei der das Gehäuse 10 einen Stecker aufweist, der mit einer Steckbuchse am Ende des Leitungszweiges 8 die Steckverbindung 32 bildet.

In besonderer Ausgestaltung des Moduls A ist das Gehäuse 10 derart ausgebildet, dass der eine Anschluss 11 als Stecker 42 und der andere Anschluss 12 als Steckbuchse 41 ausgebildet ist. So kann das Gehäuse 10 in einfacher Weise bei der Installation der Anlage 30 zwischen einer Hauptversorgungsleitung 3 bzw. dem Abzweig 6 einer Hauptversorgungsleitung 3 und einem Verbraucher 5 angeordnet werden. Zweckmäßig kann eine bestehende Steckverbindung zwischen dem Energie zuführenden Leitungszweig 7 zum Verbraucher 5 und der Hauptversorgungsleitung 3 geöffnet werden, um das Gehäuse 10 mit der Sicherung 20 in den Energie zuführenden Leitungszweig 7 einzusetzen und den elektrischen Verbraucher 5 über die Sicherung 20 des Gehäuses 10 elektrisch abzusichern.

In der Ausführung des Gehäuses 10 als Modul A bildet das Gehäuse 10 einen Zwischenstecker, der nach Bedarf an beliebiger Stelle im Feld einer industriellen Anlage 30 eingesetzt werden kann. Ohne großen Aufwand können bestehende und/oder nachträglich angebrachte Verbraucher 5 der industriellen Anlage 30 durch Einsetzen des Moduls A elektrisch abgesichert werden. Hierzu muss lediglich der von der Hauptversorgungsleitung 3 zum Verbraucher 5 führende Leitungszweig 7 aufgetrennt bzw. die Steckverbindung gelöst werden, um dann die offenen Enden in die Steckanschlüsse 33, 34 des Gehäuses 10 einzustecken.

Die Steckanschlüsse 33 und 34 sind als Steckverbindungen 31 und 32 ausgebildet. Es kann vorteilhaft sein, wenn die Steckverbindungen 31 und 32 mit den in der industriellen Anlage 30 im Feld verwendeten Steckverbindungen 36 kompatibel ist. Bevorzugt besteht die Steckverbindung 31, 32 und 36 aus einer Steckbuchse 41 (Fig. 2) und einem Stecker 42 (Fig. 2), insbesondere einer M12-Steckbuchse und einem M12-Stecker. Es können auch M8-Steckbuchsen und M8-Stecker oder andere Baugrößen vorteilhaft sein.

Das in Fig. 1 gezeigte Modul B entspricht im Grundaufbau dem Gehäuses 10, der im Gehäuse 10 integrierten Sicherung 20 und einer optional angeordneten Kommunikationseinheit 40 des Moduls A. Gleiche Teile sind mit gleichen Bezugszeichen versehen.

Das Gehäuse 10 des Moduls B weist an einem ersten Anschluss 11 einen Steckanschluss 33 auf, der als Steckverbindung 31 ausgebildet ist. An dem anderen, zweiten Anschluss 12 ist ein fest mit der Sicherung 20 im Gehäuse 10 verdrahtetes Kabel 18 vorgesehen. Im gezeigten Ausführungsbeispiel ist an die Steckverbindung 31 des ersten Anschlusses 11 die Energie zuführenden Leitungszweig 7 angeschlossen, der über den Abzweig 6 von der Hauptversorgungsleitung 3 abzweigt. Das an dem anderen, zweiten Anschluss 12 des Gehäuses 10 fest verdrahtet angeschlossene Kabel 18 bildet den zum Verbraucher 5 führenden elektrisch abgesicherten Leitungszweig 8.

Das Modul B kann auch so ausgeführt sein, dass an dem Anschluss 11 eine fest verdrahtetes Kabel angeschlossen ist, welches den dem Modul B Energie zuführenden Leitungszweig 7 bildet. Entsprechend ist dann der andere Anschluss 12 des Gehäuses 10 von Modul B als Teil einer Steckverbindung ausgebildet, die optional mit der Steckverbindung 38 des Verbrauchers 5 kompatibel sein können. Das Modul B kann direkt am Verbraucher 5 eingesteckt werden. Es kann auch ein offenes Ende des Kabels zweckmäßig sein, so dass z.B. eine unmittelbare Verdrahtung mit dem Verbraucher 5 möglich ist.

In weiterer Ausbildung des Gehäuses 10 kann an dem ersten Anschluss 11 des Gehäuses 10 als Energie zuführender Leitungszweig 7 ein fest mit der Sicherung 20 im Gehäuse 10 verdrahtetes Kabel 17 vorgesehen sein. An dem zweiten Anschluss 12 des Gehäuses 10 ist entsprechend der Darstellung des Moduls C ein fest mit der Sicherung 20 im Gehäuse 10 verdrahtetes Kabel 18 angeschlossen, welches den elektrisch abgesicherten Leitungszweig 8 zum Verbraucher 5 bildet.

Wie am Beispiel des Moduls C gezeigt, liegt das Gehäuse 10 mit der Sicherung 20 und der optional vorgesehenen Kommunikationseinheit 40 zwischen dem Abzweig 6 und dem Verbraucher 5. Durch Variation der Länge der Kabel 17 und 18 kann im Feld die Lage des Moduls C frei gewählt werden.

Sind an dem Gehäuse 10 fest verdrahtetes Kabel 17 und/oder 18 angeschlossen, können die freien Enden der Kabel 17 und/oder 18 mit einem Stecker oder einer Steckbuchse zur Bildung eines Steckanschlusses 19 ausgebildet sein. Optional kann eine derartiger Steckanschluss 19 mit den im Feld der Anlage 30 verwendeten Steckverbindungen kompatibel sein. Das freie Ende eines Kabels 17 oder 18 kann in einfacher Weise durch Einstecken in die Steckverbindung elektrisch kontaktiert werden. Die freien Enden der Kabel 17 und/oder 18 können auch als Leitungsende vorgesehen sein.

Das Gehäuse 10 des Moduls D entspricht im Grundaufbau den Gehäusen 10 der Module A, B oder C. Das Gehäuse 10 des Moduls D weist einen weiteren Anschluss 13 auf, der im Ausführungsbeispiel des Gehäuses 10 des Moduls D als dritter Anschluss 13 vorgesehen ist. Das Gehäuse 10 ist insbesondere als T-Stecker ausgeführt. Andere Formen des Steckers mit zwei oder mehr Anschlüssen können zweckmäßig sein.

Im Gehäuse 10 des Moduls D ist der Energie führender Leitungszweig 7 der Hauptversorgungsleitung 3 von dem ersten Anschluss 11 auf den dritten Anschluss 13 durchgeschleift. Die Hauptversorgungsleitung 3 ist somit durch das Gehäuse 10 des Moduls D durchgeführt. Im Gehäuse 10 des Moduls D ist die dem Verbraucher 5 Energie zuführender Leitung 7 abgezweigt. Der Abzweig ist mit der Sicherung 20 verbunden, sodass am zweiten Anschluss 12 ein elektrisch abgesicherter Leitungszweig 8 zur Verfügung steht. Wie am Modul D gezeigt, ist zwischen dem zweiten Anschluss 12 und dem Verbraucher 5 ein Kabel 26 gesteckt, welches den elektrisch abgesicherten Leitungszweig 8 mit dem Verbraucher 5 verbindet.

Alle Anschlüsse 11, 12 und 13 des Gehäuses 10 des Moduls D können optional als Steckanschlüsse für anzuschließendes Leitungszweiges ausgebildet. Dies entspricht dem Modul A, bei dem das Gehäuse 10 ebenfalls alle Anschlüsse 11 als Stecker Anschlüsse ausgebildet sind.

Das Modul D kann insbesondere als Piercing Gehäuse ausgebildet sein, das unter Nutzung der Piercing Technologie direkt auf eine Energie führende Flachbandleitung aufgebracht wird. Die Flachbandleitung verläuft über den Anschluss 11 zum Anschluss 13, wobei über in die Flachbandleitung eingreifende Piercing Elemente die elektrische Verbindung zur Sicherung herstellt wird. Über die im Gehäuse integrierte Sicherung führt der abgesicherte Leitungszweig über den Anschluss 12 zum Verbraucher.

Die im Gehäuse 10 der Module A, B, C und D vorgesehene Sicherung ist als thermometermechanische Sicherung wie z.B. als Bimetall-Sicherung oder auch als einfache Schmelzsicherung ausgebildet, oder die Sicherung 20 als elektronische Sicherung ausgebildet, wie sie beispielhaft in Fig. 2 dargestellt ist.

Das schematisch dargestellte Gehäuse 10 des Moduls A, B, C oder D weist einen ersten Anschluss 11 für den Energie zu führenden Leitungszweig 7 und einen zweiten Anschluss 12 für den elektrisch abgesicherten Leitungszweig 8 auf.

Im Strompfad 21 zwischen dem Netzteil 2 und dem Verbraucher 5 ist ein elektronisches Schaltelement 22 angeordnet, dass von einem Controller 23 angesteuert ist. Der Controller 23 erfasst über einen Stromsensor 24 den im Strompfad 21 fließenden Strom I und vergleicht dessen Wert mit einem im Controller 23 gespeicherten Grenzwert. Der Controller 23 kann so ausgebildet sein, dass er bei Erreichen und/oder Überschreiten des gespeicherten Grenzwertes das elektronische Schaltelement 22 ansteuert. In einer ersten Betriebsweise kann der Controller 23 den fließenden Strom I begrenzen, so dass der gespeicherte Grenzwert nicht überschritten wird. In einer zweiten Betriebsweise kann der Controller 23 den Strompfad 21 öffnen, sodass der Verbraucher 5 abgeschaltet ist. Die Betriebsweisen können auch miteinander kombiniert werden, derart, dass z.B. der Strom I zunächst begrenzt wird und erst nach einer vorgegebenen Zeitdauer einer aktiven Strombegrenzung der Controller 23 den Strompfad 21 öffnet und den Verbraucher 5 abschaltet.

Vorteilhaft ist die elektronische Sicherung 20 derart ausgebildet, dass nach einem Öffnen des Schaltelementes 22 und Ablauf einer im Controller 23 vorgegebenen Zeit das Schaltelement 22 erneut angesteuert und der Strompfad 21 wieder geschlossen wird. Übersteigt der über den Stromsensor 24 erfasste Strom I den Grenzwert nicht erneut, bleibt der Verbraucher 5 in Betrieb.

Im Gehäuse 10 der elektrischen Sicherung 20 ist optional eine Kommunikationseinheit 40 integriert, wie sie beispielhaft in den Modulen A, B, C und D sowie in Fig. 2 dargestellt ist. Die Kommunikationseinheit 40 kann mit einem Kommunikationsbus 4 verbunden sein, der parallel zu den Energie führenden Leitungen in der Hauptversorgungsleitung 3 und zumindest den Energie zuführenden Leitungszweigen 7 zum Gehäuse 10 verläuft. Die Kommunikationseinheit 40 kann über den Kommunikationsbus 4 Betriebsparameter der Sicherung 20 einer übergeordneten Überwachungseinheit melden. So können in der übergeordneten Überwachungseinheit die Betriebszustände der Sicherungen, die Größe des fließenden Stroms I, aufgelaufene Betriebsstunden der Sicherung, die Netzqualität der abgesicherten Spannung und dergleichen angezeigt werden. In besonderer Weiterbildung der Erfindung kann über die Kommunikationseinheit 40 eine elektronische Sicherung 20, wie in Fig. 2 dargestellt, parametriert werden. So können über die Kommunikationseinheit 40 im Controller 23 zum Beispiel der Grenzwert des fließenden Stroms I, der Anstieg des fließenden Stroms I, eine zugelassene Zeitdauer eines Überstroms oder dergleichen geändert werden. Die elektronische Sicherung 20 ist parametrierbar.

Anstelle eines fest verdrahteten Kommunikationsbus 4 kann es vorteilhaft sein, die Kommunikationseinheit 40 als drahtlose Kommunikationseinheit auszubilden. Die drahtlose Kommunikationseinheit kann über NFC, Bluetooth, IO-Link Wireless, WLAN und oder Mobilfunkstandards wie 5G, LTE oder dergleichen mit einer übergeordneten Einheit kommunizieren.

In weiterer Ausgestaltung des Gehäuses 10 kann eine Anzeigevorrichtung 28 im Gehäuse 10 integriert werden. So zeigt Fig. 3 eine optische Anzeigevorrichtung, die eine Schmelzsicherung 29 überwacht. Trend die Schmelzsicherung den Strompfad 21, spricht die optische Anzeigevorrichtung 28 an und signalisiert die Zerstörung der Schmelzsicherung 29.

## Patentansprüche

1. Elektrische Sicherung zur Absicherung der Energieverteilung in einer industriellen Anlage (30), insbesondere eine Automatisierungsanlage oder eine Anlage der Intralogistik,
(a) mit in der Anlage (30) verteilt angeordneten elektrischen Verbrauchern (5) wie Aktoren und/oder Sensoren,
(b) wobei einem elektrischen Verbraucher (5) über einen Energie zuführenden Leitungszweig (7) der Energieverteilung (1) elektrische Energie zugeführt ist,
(c) und die elektrische Sicherung (20) in dem Energie zuführenden Leitungszweig (7) anordenbar ist,
(d) wobei die elektrische Sicherung (20) in einem geschlossenen Gehäuse (10) aufgenommen ist,
(e) wobei das Gehäuse (10) allseits geschlossen ist,
**dadurch gekennzeichnet, dass**,
(f) die elektrische Sicherung (20) im Gehäuse eine thermomechanische Sicherung oder eine Bimetall-Sicherung oder eine elektronische Sicherung oder eine Schmelzsicherung ist,
(g) wobei das Gehäuse (10) als Zwischenstecker ausgebildet ist,
(h) und das Gehäuse (10) zumindest einen ersten Anschluss (11) für einen Energie zuführenden Leitungszweig (7)
(i) und zumindest einen zweiten Anschluss (12) für einen elektrisch abgesicherten Leitungszweig (8) aufweist,
(j) und der zweite Anschluss (12) mit einem elektrischen Verbraucher (5) verbindbar ist,
(k) und zumindest ein Anschluss (11, 12) des Gehäuses (10) als Teil eines elektrischen Steckanschlusses (33, 34) für einen anzuschließenden Leitungszweig (7, 8) ausgebildet ist.

2. Elektrische Sicherung nach Anspruch 1,
**dadurch gekennzeichnet, dass** das Gehäuse (10) ein Gehäuse der Schutzklasse IP20 bis IP69k ist.

3. Elektrische Sicherung nach Anspruch 2,
**dadurch gekennzeichnet, dass** das Gehäuse (10) ein Gehäuse der Schutzklasse IP54 bis IP68 ist.

4. Elektrische Sicherung nach Anspruch 1,
**dadurch gekennzeichnet, dass** das Gehäuse (10) des Zwischensteckers mit einem weiteren Anschluss (13) ausgebildet ist, insbesondere das Gehäuse (10) als T-Stecker ausgeführt ist, und der Energie zuführende Leitungszweig (7) von dem ersten Anschluss (11) auf den weiteren Anschluss (13) durchgeschleift ist.

5. Elektrische Sicherung nach einem der Ansprüche 1 bis 4,
**dadurch gekennzeichnet, dass** alle Anschlüsse (11, 12, 13) des Gehäuses (10) als Teil eines elektrischen Steckanschlusses (33, 34) ausgebildet sind.

6. Elektrische Sicherung nach Anspruch 1 oder 5,
**dadurch gekennzeichnet, dass** der erste Anschluss (11) des Gehäuses als Teil eines elektrischen Steckanschlusses (33) zur Verbindung mit dem Energie zuführenden Leitungszweig (7) und der zweite Anschluss (12) des Gehäuses (10) als Teil eines elektrischen Steckanschlusses (34) zum Anschluss mit dem elektrisch abgesicherten Leitungszweig (8) zum Verbraucher (5) ausgebildet ist.

7. Elektrische Sicherung nach einem der Ansprüche 1 bis 6,
**dadurch gekennzeichnet, dass** der Steckanschluss (33, 34) durch eine Steckverbindung (31, 32) aus einer Steckbuchse (41) und einem Stecker (42) gebildet ist.

8. Elektrische Sicherung nach einem der Ansprüche 1 bis 7,
**dadurch gekennzeichnet, dass** die im Gehäuse (10) aufgenommene Sicherung (20) eine elektronische Sicherung ist.

9. Elektrische Sicherung nach einem der Ansprüche 1 bis 8,
**dadurch gekennzeichnet, dass** die im Gehäuse (10) aufgenommene Sicherung (20) selbstrückstellend ist.

10. Elektrische Sicherung nach einem der Ansprüche 1 bis 9,
**dadurch gekennzeichnet, dass** im Gehäuse (10) eine Anzeigevorrichtung (28) integriert ist, die geeignet ist, den Betriebszustand der im Gehäuse (10) vorhandenen Sicherung (20) anzuzeigen.

11. Elektrische Sicherung nach einem der Ansprüche 1 bis 10,
**dadurch gekennzeichnet, dass** im Gehäuse (10) eine insbesondere drahtlose Kommunikationseinheit (40) aufgenommen ist, die geeignet ist, Betriebszustände der Sicherung (20) anzuzeigen, wie zum Beispiel Größe des fließenden Stroms (I), aufgelaufene Betriebsstunden der Sicherung (20), Netzqualität der Energieversorgung zu erfassen und zu senden und/oder Betriebsparameter der Sicherung (20) zu ändern.

12. Elektrische Sicherung nach Anspruch 11,
**dadurch gekennzeichnet, dass** die Kommunikationseinheit (40) ausgebildet ist, drahtlos zu kommunizieren, insbesondere über NFC, Bluetooth, IO-Link Wireless, WLAN und/oder Mobilfunkstandards wie 5G, LTE.

## Claims

1. Electrical fuse for safeguarding energy distribution in an industrial installation (30), in particular an automation installation or an intralogistics installation,
(a) having electrical consumers (5), such as actuators and/or sensors, arranged in a distributed manner in the installation (30),
(b) wherein electrical energy is supplied to an electrical consumer (5) via an energy-supplying line branch (7) of the energy distribution system (1),
(c) and the electrical fuse (20) can be arranged in the energy-supplying line branch (7),
(d) wherein the electrical fuse (20) is accommodated in a closed housing (10),
(e) wherein the housing (10) is closed on all sides,
**characterized in that**
(f) the electrical fuse (20) in the housing is a thermomechanical fuse or a bimetallic fuse or an electronic fuse or a fusible link,
(g) wherein the housing (10) is designed as an intermediate plug,
(h) and the housing (10) has at least one first connection (11) for an energy-supplying line branch (7)
(i) and at least one second connection (12) for an electrically protected line branch (8),
(j) and the second connection (12) can be connected to an electrical consumer (5),
(k) and at least one connection (11, 12) of the housing (10) is designed as part of an electrical plug-in connection (33, 34) for a line branch (7, 8) to be connected.

2. Electrical fuse according to Claim 1,
**characterized in that** the housing (10) is a housing of protection class IP20 to IP69k.

3. Electrical fuse according to Claim 2,
**characterized in that** the housing (10) is a housing of protection class IP54 to IP68.

4. Electrical fuse according to Claim 1,
**characterized in that** the housing (10) of the intermediate plug is designed with a further connection (13), in particular the housing (10) is embodied as a T-plug, and the energy-supplying line branch (7) is looped through from the first connection (11) to the further connection (13).

5. Electrical fuse according to any of Claims 1 to 4,
**characterized in that** all connections (11, 12, 13) of the housing (10) are designed as part of an electrical plug-in connection (33, 34).

6. Electrical fuse according to Claim 1 or 5,
**characterized in that** the first connection (11) of the housing is designed as part of an electrical plug-in connection (33) for connection to the energy-supplying line branch (7) and the second connection (12) of the housing (10) is designed as part of an electrical plug-in connection (34) for connection to the electrically protected line branch (8) to the consumer (5).

7. Electrical fuse according to any of Claims 1 to 6,
**characterized in that** the plug-in connection (33, 34) is formed by a plug-in connection (31, 32) composed of a plug socket (41) and a plug (42).

8. Electrical fuse according to any of Claims 1 to 7,
**characterized in that** the fuse (20) accommodated in the housing (10) is an electronic fuse.

9. Electrical fuse according to any of Claims 1 to 8,
**characterized in that** the fuse (20) accommodated in the housing (10) is self-resetting.

10. Electrical fuse according to any of Claims 1 to 9,
**characterized in that** an indicator device (28) is integrated in the housing (10) and is suitable for indicating the operating state of the fuse (20) present in the housing (10).

11. Electrical fuse according to any of Claims 1 to 10,
**characterized in that** an, in particular wireless, communication unit, (40) is accommodated in the housing (10) and is suitable for indicating operating states of the fuse (20), such as, for example, magnitude of the flowing current (I), accumulated operating hours of the fuse (20), network quality of the power supply, detecting and transmitting these and/or changing operating parameters of the fuse (20).

12. Electrical fuse according to Claim 11,
**characterized in that** the communication unit (40) is designed to communicate wirelessly, in particular via NFC, Bluetooth, IO-Link Wireless, WLAN and/or mobile radio standards such as 5G, LTE.

## Revendications

1. Fusible électrique destiné à protéger la distribution d'énergie dans une installation industrielle (30), en particulier une installation d'automatisation ou une installation d'intralogistique,
(a) comportant des consommateurs électriques (5) tels que des actionneurs et/ou des capteurs, disposés de manière répartie dans l'installation (30),
(b) de l'énergie électrique étant fournie à un consommateur électrique (5) par l'intermédiaire d'une branche de ligne d'alimentation en énergie (7) de la distribution d'énergie (1),
(c) et le fusible électrique (20) pouvant être disposé dans la branche de ligne d'alimentation en énergie (7),
(d) le fusible électrique (20) étant logé dans un boîtier fermé (10),
(e) le boîtier (10) étant fermé sur toutes ses faces,
**caractérisé en ce que**,
(f) le fusible électrique (20) présent dans le boîtier est un fusible thermomécanique ou un fusible bimétallique ou un fusible électronique ou un fusible à fusion,
(g) le boîtier (10) étant conçu sous forme de fiche intermédiaire,
(h) et le boîtier (10) présente au moins une première borne (11) pour une dérivation de ligne d'alimentation en énergie (7)
(i) et comporte au moins une deuxième borne (12) pour une dérivation de ligne électriquement protégée (8),
(j) et la deuxième borne (12) peut être connectée à un consommateur électrique (5),
(k) et au moins une borne (11, 12) du boîtier (10) est conçue sous la forme d'une partie d'une borne enfichable électrique (33, 34) pour une dérivation de ligne (7, 8) à connecter.

2. Fusible électrique selon la revendication 1,
**caractérisé en ce que** le boîtier (10) est un boîtier de classe de protection IP20 à IP69k.

3. Fusible électrique selon la revendication 2,
**caractérisé en ce que** le boîtier (10) est un boîtier de classe de protection IP54 à IP68.

4. Fusible électrique selon la revendication 1,
**caractérisé en ce que** le boîtier (10) de la fiche intermédiaire est réalisé de manière à comporter une autre borne (13), en particulier **en ce que** le boîtier (10) est réalisé sous la forme d'une fiche en T, et la branche de ligne d'alimentation en énergie (7) est guidée de la première borne (11) à l'autre borne (13).

5. Fusible électrique selon l'une des revendications 1 à 4,
**caractérisé en ce que** toutes les bornes (11, 12, 13) du boîtier (10) sont conçues sous la forme d'une partie d'une borne électrique enfichable (33, 34).

6. Fusible électrique selon la revendication 1 ou 5,
**caractérisé en ce que** la première borne (11) du boîtier est conçue sous la forme d'une partie d'une borne électrique enfichable (33) pour la connexion à la dérivation de ligne d'alimentation (7) et la deuxième borne (12) du boîtier (10) est conçue sous la forme d'une partie d'une borne électrique enfichable (34) pour la connexion à la dérivation de ligne protégée électriquement (8) au consommateur (5).

7. Fusible électrique selon l'une des revendications 1 à 6,
**caractérisé en ce que** la borne enfichable (33, 34) est formée par une connexion enfichable (31, 32) composée d'une douille enfichable (41) et d'une fiche (42).

8. Fusible électrique selon l'une des revendications 1 à 7,
**Caractérisé en ce que** le fusible (20) logé dans le boîtier (10) est un fusible électronique.

9. Fusible électrique selon l'une des revendications 1 à 8,
**caractérisé en ce que** le fusible (20) logé dans le boîtier (10) est auto-réparable.

10. Fusible électrique selon l'une des revendications 1 à 9,
**caractérisé en ce qu'**un dispositif d'affichage (28) est intégré dans le boîtier (10) et est apte à afficher l'état de fonctionnement du fusible (20) présent dans le boîtier (10).

11. Fusible électrique selon l'une des revendications 1 à 10,
**caractérisé en ce qu'**une unité de communication (40), en particulier une unité de communication sans fil, est logée dans le boîtier (10), et est apte à indiquer des états de fonctionnement du fusible (20), comme par exemple l'intensité du courant (I), les heures de fonctionnement accumulées du fusible (20), pour détecter et transmettre la qualité de l'alimentation en énergie du réseau et/ou pour modifier des paramètres de fonctionnement du fusible (20).

12. Fusible électrique selon la revendication 11,
**caractérisé en ce que** l'unité de communication (40) est conçue pour communiquer sans fil, en particulier par NFC, Bluetooth, liaison IO sans fil, WLAN et/ou par des normes radio mobiles telles que 5G, LTE.
